Europäisches Patentamt

European Patent Office

Office européen des brevets

(11) Numéro de publication: **0 088 010**
**B1**

(12) **FASCICULE DE BREVET EUROPEEN**

(45) Date de publication du fascicule du brevet:
28.10.87

(21) Numéro de dépôt: **83400361.8**

(22) Date de dépôt: **22.02.83**

(51) Int. Cl.⁴: **G 11 B 7/08**

(54) **Dispositif associé à une tête optique d'ecriture-lecture d'un disque optique.**

(30) Priorité: **02.03.82 FR 8203426**

(43) Date de publication de la demande:
**07.09.83 Bulletin 83/36**

(45) Mention de la délivrance du brevet:
**28.10.87 Bulletin 87/44**

(84) Etats contractants désignés:
**DE GB IT NL SE**

(56) Documents cités:
**EP - A - 0 012 650**
**EP - A - 0 063 934**
**EP - A - 0 070 070**
**EP - A - 0 074 131**
**CH - A - 586 445**
**DE - A - 2 944 776**
**GB - A - 2 029 051**
**GB - A - 2 077 479**
**JP - A - 52 139 312**

**Patent Abstracts of Japan, vol. 2, no. 20, Feb. 9, 1978,
pp. 11305 E77?**

(73) Titulaire: **THOMSON-CSF, 173, Boulevard Haussmann,
F-75379 Paris Cédex 08 (FR)**

(72) Inventeur: **Malissin, Roland, THOMSON-CSF
SCPI 173, bld Haussmann, F-75379 Paris Cedex 08 (FR)**
Inventeur: **Monlouis, Claude, THOMSON-CSF
SCPI 173, bld Haussmann, F-75379 Paris Cedex 08 (FR)**

(74) Mandataire: **Grynwald, Albert et al, THOMSON-CSF
SCPI 19, avenue de Messine, F-75008 Paris (FR)**

## Description

L'invention se rapporte au domaine de l'enregistrement d'informations sur supports lisibles optiquement par un rayonnement concentré et a plus particulièrement pour objet une tête optique d'écriture-lecture d'un disque optique et un dispositif optique associé à une telle tête.

Dans le cas de l'écriture et/ou de la lecture d'un disque de type optique, il est nécessaire:

– d'accéder à une zone du disque,

– de se maintenir dans cette zone avec une bonne précision aussi bien radialement, que perpendiculairement à la surface du disque (focalisation).

Dans les dispositifs de l'art connu une «tête optique» remplit les deux dernières fonctions; elle est composée généralement d'un actuateur ou moteur du type «bobine de haut parleur» permettant le mouvement de focalisation perpendiculairement à la face du disque, et d'un actuateur, permettant le mouvement radial de suivi de piste, constitué soit d'un miroir oscillant, soit d'un dispositif de translation pouvant être fixé dans la partie mobile de l'actuateur de focalisation.

L'accès, lui, s'obtient en déplaçant l'ensemble de la «tête optique» soit avec un système de vis et moteur à courant continu ou moteur pas à pas, soit avec un système à moteur et bande. La technique du moteur linéaire employée dans certains disques magnétiques peut être aussi utilisée.

Il est intéressant de pouvoir utiliser l'actuateur d'accès pour effectuer au moins partiellement la poursuite radiale de piste, et cela, en conservant pour cet actuateur un encombrement réduit et une puissance de commande elle aussi réduite.

Le document EP-A1-0074131 appartenant à l'état de la technique visé à l'article 54(3) de la CBE, décrit un dispositif d'exploration optique à bras pivotant qui porte à son extrémité libre une tête optique équipée d'un actuateur de focalisation à aimant permanent.

L'objectif de focalisation est relié au bras pivotant par une suspension élastique à lames parallèles orientées tangentiellement par rapport à l'axe de pivotement.

Les «têtes optiques» utilisées classiquement comportent un ou plusieurs circuits magnétiques permettant les mouvements de focalisation et de poursuite radiale; cela entraîne une masse relativement élevée de ces «têtes optiques» (de l'ordre de 20 à 40 g).

Si l'on désire obtenir une correction au moins partielle de la poursuite radiale avec l'actuateur d'accès, ce dernier ne peut très certainement être que du type moteur linéaire. La masse de la tête optique impose les dimensions et la masse du moteur linéaire d'accès et par suite de puissance de commande de l'actuateur d'accès.

Afin de minimiser les dimensions et aussi par suite la puissance de commande de l'actuateur d'accès, il apparaît nécessaire de diminuer la masse de la «tête optique». Une solution consiste à rendre fixes les circuits magnétiques de la «tête optique» et donc à ne plus lier à l'objectif mobile que des bobines interagissant avec un champ fixe.

Cependant, deux bobines semblent faire double-emploi: d'une part, la bobine de l'actuateur d'accès qui permet l'accès et une correction partielle de l'écart de piste et, d'autre part, la bobine de l'actuateur de poursuite radiale de piste. Pour ce faire l'invention consiste tout d'abord à éliminer la bobine de poursuite de piste, la bobine d'accès étant alors chargée des deux fonctions d'accès et de poursuite radiale. Le déplacement du spot lumineux étant la conséquence de la force électrodynamique développée par la bobine d'accès, il faut assurer entre ces grandeurs une relation linéaire lorsqu'on considère la plage de fréquence de fonctionnement de l'asservissement radial. Les causes de non-linéarité sont multiples et vont être analysées successivement.

Tout d'abord un tel dispositif peut fonctionner, mais ses performances sont limitées par le frottement solide, essentiellement non linéaire, introduit par le guidage de la bobine d'accès, que ce guidage soit effectué à l'aide de moyens en roulement (galets ou roulements à billes) ou de moyens en simple glissement.

Avec un guidage soit en roulement, soit en frottement, effectué directement sur le noyau magnétique central, un tel dispositif permet d'obtenir une précision de suivi de piste de l'ordre de quelques micromètres. Mais dans un disque de type optique, la précision requise est de l'ordre de 0,1 micromètre.

Ainsi un dispositif de l'art connu, décrit dans la demande de brevet européen publié sous le N° 0012650, concerne un dispositif assurant l'asservissement vertical et l'asservissement radial de position par déplacement d'un équipage mobile de très faible poids, ces deux asservissements étant commandés par des courants proportionnels aux déplacements à obtenir. Pour cela, des éléments conducteurs parcourus par les courants de commande sont placés dans un champ magnétique fixe, orthogonal au rayon et s'étendant sur toute la longueur utile du rayon du disque, et se déplaçant dans ce champ magnétique; l'objectif de lecture étant rendu solidaire de ces éléments mobiles.

Cependant, ce dispositif de l'art connu est muni de pièces en glissement dans l'entrefer de son circuit magnétique et présente donc les limitations liées au frottement solide et décrites précédemment.

Il est connu du document Patent Abstracts of Japan, volume 2, numéro 20, 9 février, 1978, page 11305 E 77 et du document JP-A-52 139 312 d'utiliser la force d'attraction d'un électroaimant pour régler l'éloignement d'un objectif de focalisation par rapport à la surface d'un support d'information.

Ainsi le fonctionnement correct d'un dispositif mixte d'accès et de suivi de piste est lié essentiellement à son guidage et c'est le dispositif de guidage permettant de pallier ce grave inconvénient de l'art connu qui est l'objet principal de l'invention. Dans le dispositif de l'invention, pour effectuer ce guidage, on utilise la répulsion entre deux champs magnétiques.

Le guidage s'effectue par sustentation de la tête optique.

De plus, la fixation de l'actuateur de focalisation sur l'actuateur radial permet, outre les avantages mécaniques escomptés, d'éviter certains défauts de réaction optique inhérents aux têtes optiques classiques; en effet, qu'il s'agisse d'un système avec miroir radial oscillant ou d'un système avec actuateur radial en translation fixé sur l'actuateur de focalisation, on ne peut éviter complètement d'avoir un déplacement du faisceau optique entraînant soit un effet de diaphragme de la pupille de l'objectif, soit un déplacement ou une déformation de la tache optique de retour. Ceci constitue d'autres causes de non linéarité qui peuvent avoir des répercussions sur la qualité de l'asservissement radial.

Au contraire dans le cas d'un actuateur de focalisation fixé sur l'actuateur de poursuite radial, ces effets sont inexistants et un système de senseur de poursuite radiale par exemple de type «push-pull» est utilisable.

L'invention a pour objet un dispositif d'accès à une piste portée par un support d'information comportant une tête optique mobile projetant dans une surface de référence dudit support un spot lumineux destiné à interagir avec des éléments adjacents de ladite piste, ladite tête renfermant un objectif de projection dudit spot pouvant se déplacer selon deux directions, l'une normale par rapport à ladite surface, l'autre transversale par rapport auxdits éléments de piste, afin de réaliser respectivement la focalisation précise et le suivi de l'un desdits éléments de piste, ledit dispositif comprenant une nacelle mobile porte-objectif déplaçable selon ladite direction normale, un élément mobile de soutien de ladite nacelle et un organe porteur dudit élément mobile assurant son guidage selon ladite direction transversale; ledit dispositif comprenant en outre, associés audit organe porteur des moyens magnétiques fixes inducteurs d'un champ magnétique de direction perpendiculaire auxdites directions et des premier et second moyens électriquement conducteurs plongés dans ledit champ magnétique pour produire en réponse à des courants électriques de commande des première et seconde forces électrodynamiques de directions respectivement parallèles auxdites directions normale et transversale; ledit premier moyen électriquement conducteur étant solidaire de ladite nacelle mobile et ledit second moyen électriquement conducteur étant solidaire dudit élément mobile de guidage, caractérisé en ce que la liaison entre ladite nacelle et ledit élément mobile est rigide au moins dans ladite direction transversale (Y) et en ce que pour supprimer le frottement solide entre ledit organe porteur et ledit élément mobile, ce dernier est sustenté par des forces de répulsion entre deux champs magnétiques.

L'invention sera mieux comprise et d'autres caractéristiques apparaîtront à l'aide de la description qui suit en référence aux figures annexées parmi lesquelles:

- les figures 1 et 2 représentent des vues schématiques d'une tête optique allégée à trois actuateurs;

- les figures 3 à 5 illustrent différents aspects d'une tête optique selon l'invention;

- les figures 6 et 7 illustrent une variante de la tête optique de l'invention;

- les figures 8 à 13 illustrent différents aspects particuliers de l'invention;

- les figures 14 et 15 illustrent le dispositif de guidage de la tête optique selon l'invention;

- les figures 16 à 18 illustrent diverses variantes de ce dispositif de guidage.

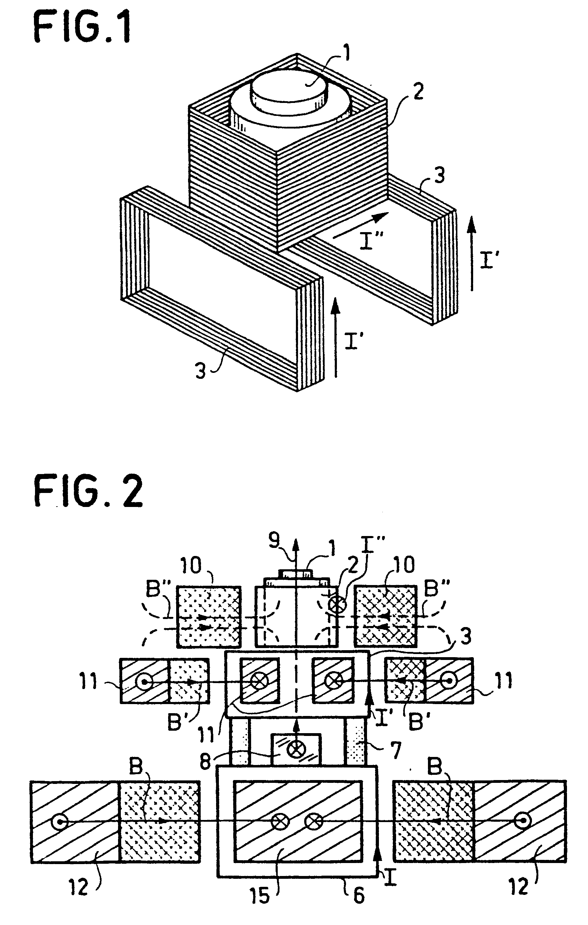

Ainsi, afin de minimiser les dimensions et aussi par suite la puissance de commande de l'actuateur d'accès, une amélioration des têtes optiques consiste à diminuer la masse de la «tête optique» en rendant fixes les circuits magnétiques de la «tête optique» et donc en ne liant plus à l'objectif mobile que des bobines magnétiques interagissant avec un champ fixe. Un tel système est décrit sur les figures 1 et 2 qui représentent schématiquement un type de réalisation possible.

La figure 1 illustre une vue en perspective d'une tête mobile de focalisation et de poursuite radiale et d'accès, 1 représente l'objectif, 2 la bobine de focalisation et 3 la bobine de poursuite radiale. Un courant I'' parcourt la bobine de focalisation 2, et un courant I' parcourt la bobine de poursuite radiale 3.

Cet ensemble apparaît aussi dans la figure 2 dans laquelle la troisième bobine, la bobine d'accès 6, qui est parcourue par un courant I, est représentée.

Une fixation souple radialement et en focalisation relie l'ensemble des deux bobines 2, 3 et l'objectif 1 à la bobine d'accès 6.

12 représente le circuit magnétique du moteur linéaire d'accès. Celui-ci est un ensemble magnétique fixe refermé aux deux extrémités. Il comporte un noyau central 15 avec les directions du champ magnétique B.

Sur cette figure et sur les suivantes les parties hachurées représentent les pièces polaires et les parties quadrillées les aimants.

11 représente le circuit magnétique radial et 10 l'aimant de focalisation.

8 représente le miroir de renvoi sur lequel se réfléchit le faisceau lumineux 9 qui est focalisé par l'objectif 1 pour atteindre le support des informations.

Comme représenté à la figure 2, on utilise préférentiellement deux champs magnétiques B' et B'' de mêmes directions.

Cependant, deux bobines semblent faire double-emploi: d'une part, la bobine 6 de l'actuateur d'accès qui permet l'accès et une correction partielle de l'écart de piste et, d'autre part, la bobine 3 de l'actuateur de poursuite radiale de piste. De plus, un tel dispositif paraît compliqué à réaliser et par suite peu intéressant. D'où le grand intérêt de l'invention qui consiste à éliminer la bobine de poursuite de piste 3, la bobine d'accès 6 étant alors chargée des deux fonctions d'accès et de poursuite radiale de piste.

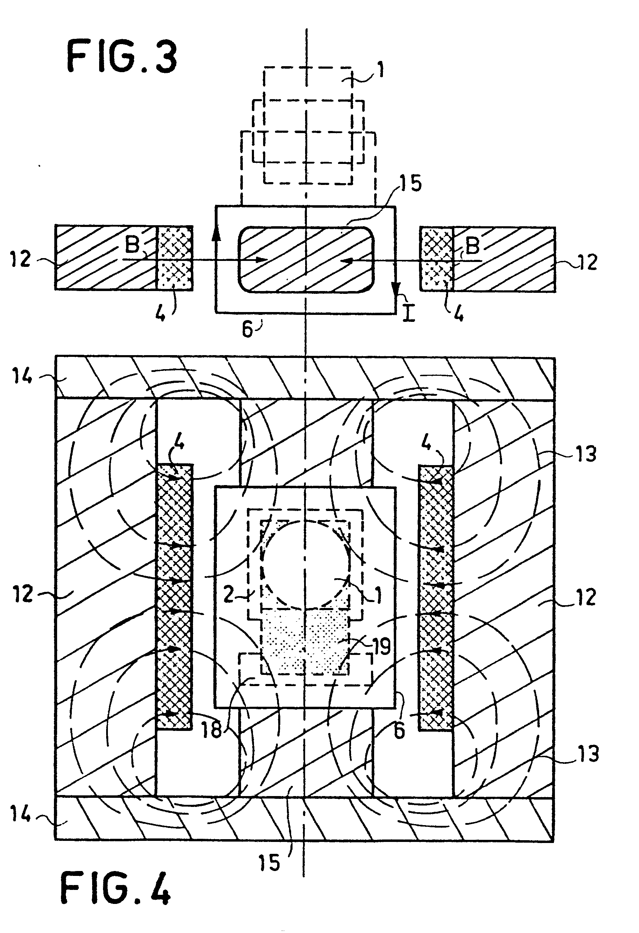

Le système est composé d'un actuateur radial et d'accès sur lequel est fixé l'actuateur de focalisation. Tous les circuits magnétiques sont fixes et de longueur un peu supérieure à la longueur radiale utile du disque, les éléments mobiles sont limités aux composants optiques (fondamentalement l'objectif) et aux bobines des actuateurs. Les deux circuits magnétiques de base sont décrits aux figures 3 et suivantes.

Les figures 3 et 4 illustrent la partie motrice de l'actuateur radial et d'accès à l'exclusion de sa suspension.

La figure 3 est une vue schématique en coupe dans laquelle on retrouve l'objectif situé sur l'actuateur de focalisation, le noyau central 15 de l'actuateur radial et d'accès, 4 les aimants droite et gauche et enfin 12 les pièces polaires de cet actuateur. En 6 est représenté la bobine correspondante.

Les mêmes éléments sont représentés à la figure 4 qui est une vue de dessus du dispositif. Les lignes de champ magnétique sont représentées en 13. Les barres 14 permettent la fermeture du champ aux extrémités de cet actuateur. L'actuateur de focalisation qui comporte la bobine 2 et auquel est relié l'objectif 1, est relié au précédent actuateur par l'intermédiaire d'au moins une lame ressort souple 19 encastrée dans un support 26 qui est solidaire de la bobine 6 du précédent actuateur. Cette bobine 6 joue le rôle des précédentes bobines 3 et 6 de la figure 2.

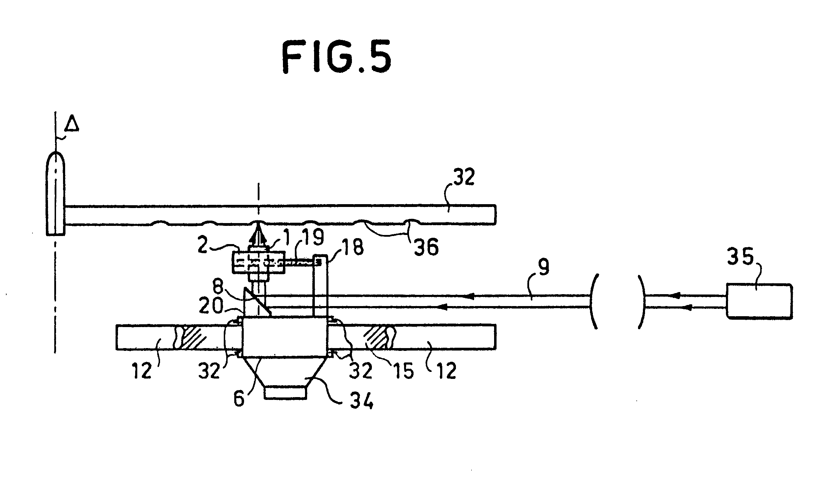

La figure 5 illustre cette partie actuateur radial et d'accès incorporée dans le dispositif d'enregistrement-lecture du disque. On retrouve donc en éclaté le noyau central 15 et les pièces polaires 12 de cet actuateur ainsi que l'actuateur de focalisation comportant la bobine 2. L'actuateur de focalisation auquel est fixé l'objectif est relié par l'intermédiaire d'une lame ressort souple 19 encastrée dans un support 18 à la bobine du précédent actuateur.

Le disque 31 qui comporte au moins une piste circulaire ou en spirale est représenté avec des sillons 36, il tourne autour de l'axe.

Le bloc optique 35 produit un rayonnement collimaté 9 qui après réflexion par le miroir 8 est focalisé sur la piste par l'objectif 1.

La bobine 6 est représentée ici avec des petits aimants 32 qui permettent la sustentation magnétique par rapport au noyau central 15. Une masse d'équilibrage de cette bobine 6 est représentée en 34. Ces mesures permettent de supprimer la non linéarité résultant du frottement solide.

Pour simplifier cette figure le circuit magnétique de focalisation qui est fixe représenté en 10 à la figure 2 a été omis.

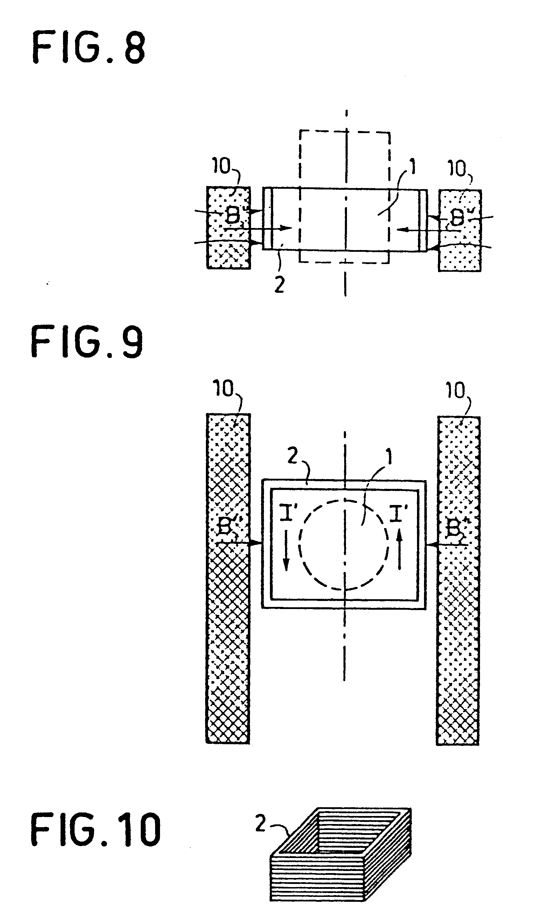

Les figures 8, 9 et 10 représentent la partie actuateur de focalisation avec une bobine 2 et des aimants 10 et un objectif en 1.

L'élément de focalisation fixé sur l'élément radial et d'accès est fixé de façon souple dans la direction de la focalisation (il présente une fréquence de résonance basse par exemple: 30Hz). Dans la direction radiale, cette fixation doit conduire à une grande raideur: elle doit présenter une fréquence de résonance élevée, c'est-à-dire située au-delà de la bande du servomécanisme radial, soit de l'ordre de 5 à 10 kHz. Cette condition s'obtient assez facilement avec des lames en matériau à fort module d'élasticité, travaillant en flexion pour la focalisation et en compression-extension pour la poursuite radiale. Le rejet à haute fréquence de cette résonance permet d'introduire le filtre de correction de boucle dans une zone de déphasage. En effet en introduisant un filtre d'avance de phase du type résistif-capacitif par exemple, on peut obtenir simplement un servomécanisme du deuxième degré. Ces mesures permettent de combattre une autre cause de non-linéarité qui rend irrégulière la courbe de réponse en fréquence.

Une masse d'inertie supplémentaire est fixée rigidement sur la bobine de poursuite radiale et d'accès du côté à celui où est fixé l'élément de focalisation. Celle-ci est représentée en 34 sur la figure 5.

Du fait de l'impossibilité de confondre parfaitement le centre d'application des forces de la bobine de poursuite radiale et d'accès et le centre de gravité de l'équipage mobile complet (bobine de poursuite radiale et d'accès, dispositif de focalisation, masse d'inertie supplémentaire), la force de la bobine de poursuite radiale produit en plus du mouvement de translation radiale, un mouvement de tangage. Pour que ce mouvement de tangage n'interdise pas la fermeture de la boucle d'asservissement radial avec un gain satisfaisant il faut placer le centre de poussée des forces et le centre de gravité de l'équipage de façon que ce tangage donne au niveau du disque un mouvement dans la direction de la translation le plus possible en phase avec cette dernière. C'est le rôle de la masse d'inertie 34 supplémentaire de permettre ce positionnement du centre de gravité. Ainsi, se trouve combattue une troisième cause de non-linéarité.

La masse d'inertie 34 supplémentaire doit être choisie avec une masse aussi faible que possible, permettant donc de ne pas trop diminuer la sensibilité radiale du système, mais permettant cependant de positionner le centre de gravité à l'endroit souhaité. Elle doit donc se présenter comme une structure rigide, fixée rigidement sur la bobine radiale, mais avec l'essentiel de sa masse éloigné de cette dernière.

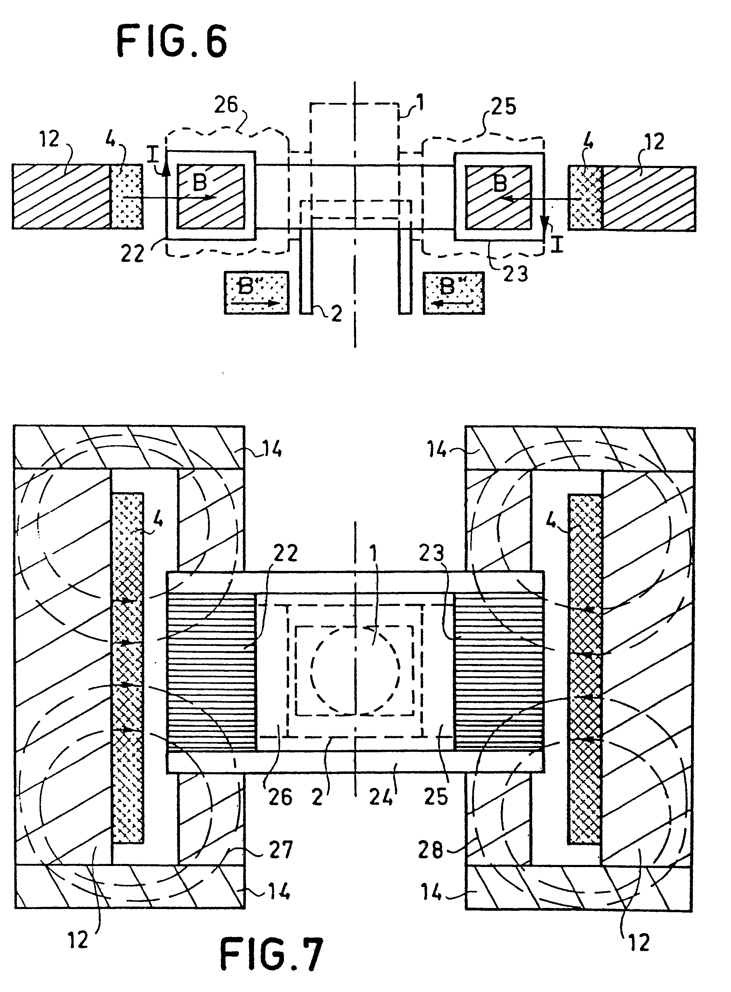

Une variante du présent dispositif d'actuateurs de focalisation et de poursuite radiale et d'accès est illustrée aux figures 6 et 7 qui correspondent respectivement aux figures 3 et 4. L'actuateur radial et d'accès comporte alors deux noyaux centraux 27 et 28 sur lesquels sont guidées deux bobines 22 et 23. 24 représente une ossature rigide reliant les deux bobines radiales 22 et 23.

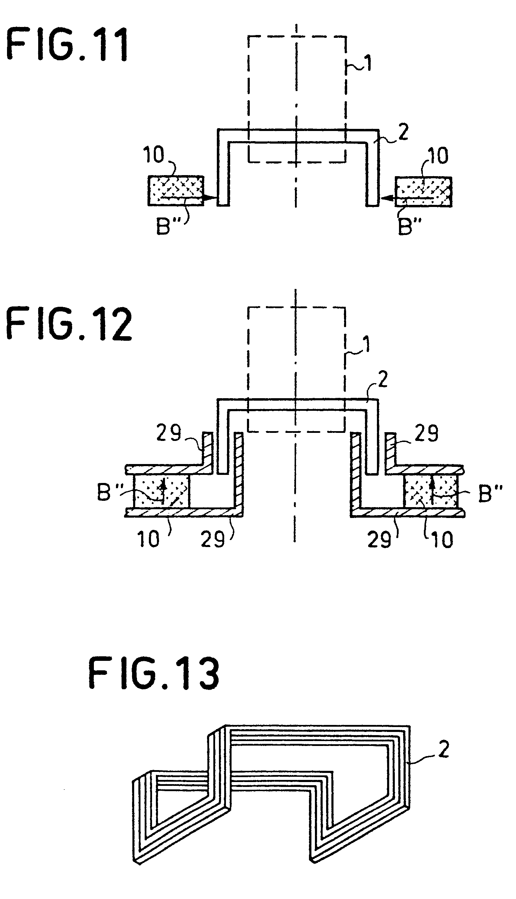

Les autres pièces de l'actuateur radial sont restées les mêmes et sont numérotées de la même façon que précédemment: on retrouve les pièces polaires 12, les aimants 4. On retrouve aussi l'objectif 1. Mais cette fois ci l'actuateur de focalisation est différent, d'une part il est relié aux deux bobines 22 et 23 par l'intermédiaire d'une suspension élastique représentée en 25 et 26. D'autre part, il est constitué d'une bobine 2 représentée aux figures 11 et 13 interagissant avec deux aimants 10 représentés à la figure 11.

Une variante de cet actuateur de focalisation est représenté à la figure 12 avec des pièces polaires 29 et des aimants 10.

Pour effectuer le guidage de la tête mobile, le dispositif suivant l'invention utilise la répulsion entre deux champs magnétiques ce qui permet la sustentation de cette tête.

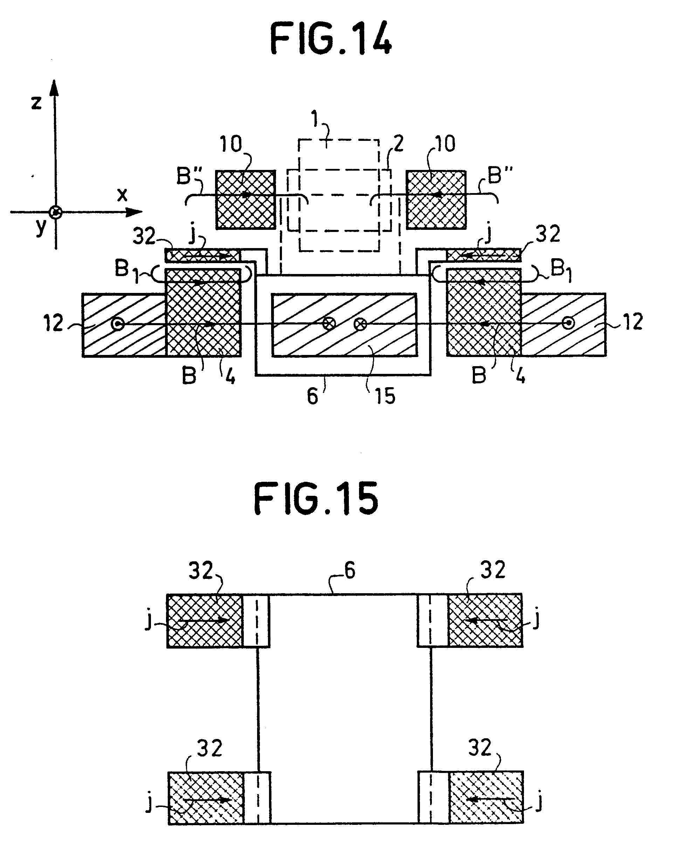

On considère alors le dispositif illustré à la figure 14.

Comme représenté à la figure 14, si l'on accroît la hauteur des aimants 4 du circuit magnétique de base de l'actuateur d'accès et de poursuite radiale sans modifier ses pièces polaires 12, on ne perturbe pas le champ dans les pièces polaires (ce champ B continue de se refermer longitudinalement, soit perpendiculairement au plan de section droite du circuit), mais on rajoute un champ $B_1$ se refermant dans un plan de section droite du circuit. Si l'on considère quatre petits aimants 18 polarisés dans la direction j comme représenté aux figures 14 et 15, il naît de l'action du champ $B_1$ sur les petits aimants des forces de répulsion tendant à les faire sortir du champ $B_1$ et à vaincre l'action de la pesanteur. Les aimants 10 formant le circuit magnétique du dispositif de focalisation sont aussi représentés sur la figure 14. Ils s'opposeraient, si besoin était, à une trop forte répulsion du circuit magnétique inférieur.

En disposant convenablement les différents petits aimants 18 solidaires de la bobine radiale et d'accès, on peut, en principe, réaliser un guidage à la fois en x et en z et de plus éviter que les rotations de roulis, tangage et lacet soient gênantes.

Cependant, si l'on se réfère à un actuateur classique, c'est-à-dire une bobine de haut parleur sans suspension mécanique, utilisé pour l'asservissement de focalisation dans de nombreux lecteurs de disque optique, on voit que l'on a seulement une force de sustentation s'opposant à la pesanteur et des frottements solides éventuels dans les directions orthogonales. Ce dispositif permet cependant d'atteindre des précisions d'asservissement de l'ordre de 0,1 micromètre.

Aussi, on peut admettre qu'il n'est pas nécessaire de réaliser un guidage parfait «toutes directions» du moteur radial et d'accès et que quatre petits aimants 18 fixés rigidement à la bobine radiale et d'accès dans la zone située au-dessus des aimants principaux permettent un guidage-sustentation suffisant de l'équipage mobile sans trop accroître sa masse. Compte tenu du gradient du champ B à la fois suivant z et suivant x, le guidage est assuré dans deux directions. Le fait d'utiliser deux fois deux aimants situés aux extrémités de la bobine radiale comme représenté à la figure 15 permet de s'opposer aux rotations mentionnées précédemment.

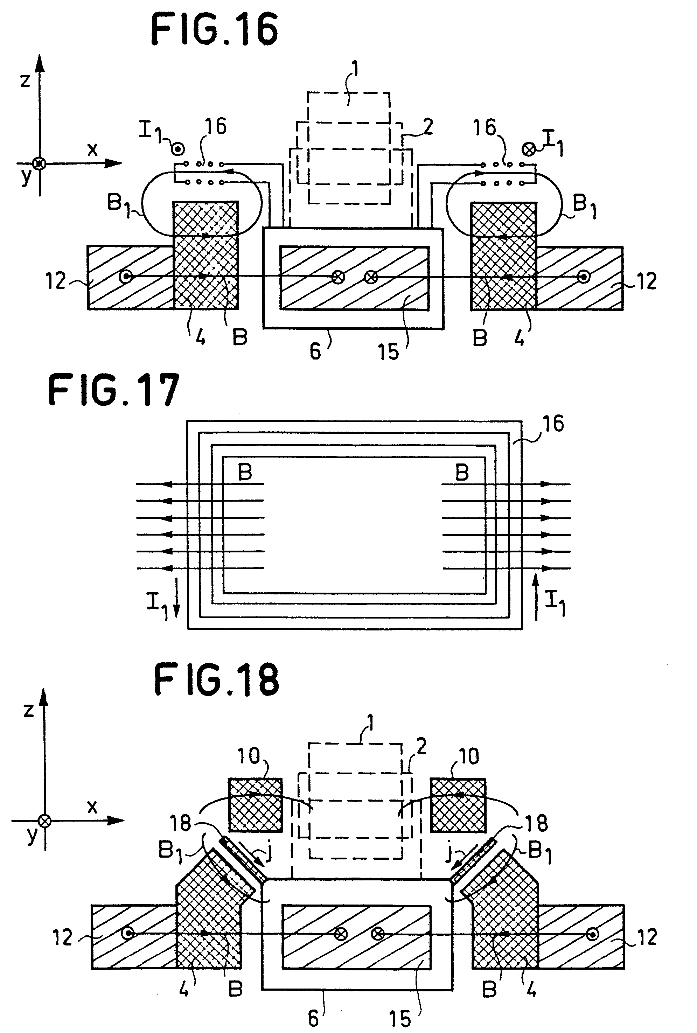

Une variante du principe du dispositif peut être l'interaction entre le champ $B_1$ de l'aimant et le courant $I_1$, d'une bobine 16 fixée sur l'équipage mobile radial et d'accès, comme représenté aux figures 16 et 17.

Si l'on désire malgré tout améliorer la précision du guidage suivant x, il est possible de modifier la partie extérieure des aimants du moteur d'accès et de poursuite radiale conformément au schéma de la figure 18. Dans ces conditions, la force de répulsion se partage de façon semblable entre les directions x et z, l'angle formé par la direction commune aux petits aimants 32 et à la surface des aimants 4 étant d'environ $\pm TC/4$ par rapport à la verticale Oz.

L'élément de focalisation étant directement soumis à la force de focalisation, la réponse de son mouvement aux hautes fréquences reste en inverse carré de la fréquence malgré la souplesse de la suspension magnétique; par conséquent, il ne se pose pas de problème de correction de boucle, le déphasage ne dépassant pas aux plus hautes fréquences.

Le système décrit ci-dessus est tout particulièrement adapté au cas où l'optique d'enregistrement-lecture est divisée en deux parties: une partie fixe comportant les sources de lumière et les senseurs et une partie mobile, la «tête optique», comportant les actuateurs et l'objectif auxquels il faut adjoindre un miroir de renvoi qui permet d'envoyer vers l'objectif le faisceau provenant de la partie fixe de l'optique, et réciproquement de renvoyer vers la partie fixe de l'optique le faisceau réfléchi par le disque et provenant de l'objectif. C'est le cas qui a été choisi pour décrire l'invention.

Il peut cependant être employé dans une tête compacte simplifiée renfermant l'ensemble de l'optique (spécialement dans le cas d'un lecteur seul dont l'optique peut être très allégée); dans ce cas l'ensemble de l'optique est situé sur le moteur radial et d'accès. L'objectif servant à la focalisation sur le disque peut, pour présenter une masse réduite être réalisé sous la forme d'une monolentille asphérique ou d'une lentille holographique.

Le laser est un laser à semi-conducteur et les éléments optiques sont réduits à leurs plus petites dimensions possibles.

A titre d'exemple, les actuateurs décrits peuvent être commandés par l'électronique suivante:

La focalisation peut être réalisée, par exemple, par des circuits comportant une correction proportionnelle et par dérivation et en plus éventuellement par intégration.

La poursuite de piste peut être réalisée, par exemple, par des circuits comportant une correction proportionnelle, par dérivation et par intégration.

L'accès à la piste du disque peut être réalisé, par exemple, par une commande gérée avec asservissement de vitesse par microprocesseur.

**Revendications**

1. Dispositif d'accès à une piste portée par un support d'information comportant une tête optique mobile projetant dans une surface de référence dudit support un spot lumineux destiné à interagir avec des éléments adjacents de ladite piste, ladite tête renfermant un objectif de projection dudit spot pouvant se déplacer selon deux directions, l'une normale par rapport à ladite surface, l'autre transversale par rapport auxdits éléments de piste, afin de réaliser respectivement la focalisation précise et le suivi de l'un desdits éléments de piste, ledit dispositif comprenant une nacelle mobile porte-objectif (2) déplaçable selon ladite direction normale, un élément mobile (6, 18, 24) de soutien de ladite nacelle et un organe porteur (15, 27, 28) dudit élément mobile assurant son guidage selon ladite direction transversale; ledit dispositif comprenant en outre, associés audit organe porteur des moyens magnétiques fixes inducteurs d'un champ magnétique (4, 12, 10, 14, 15, 27, 28, 29) de direction perpendiculaire auxdites directions et des premier et second moyens électriquement conducteurs plongés dans ledit champ magnétique pour produire en réponse à des courants électriques de commande des première et seconde forces électrodynamiques de directions respectivement parallèles auxdites directions normale et transversale; ledit premier moyen électriquement conducteur étant solidaire de ladite nacelle mobile et ledit second moyen électriquement conducteur étant solidaire dudit élément mobile de guidage, caractérisé en ce que la liaison entre ladite nacelle et ledit élément mobile est rigide au moins dans ladite direction transversale (Y) et en ce que pour supprimer le frottement solide entre ledit organe porteur (15, 27, 28) et ledit élément mobile (6, 18, 24), ce dernier est sustenté par des forces de répulsion entre deux champs magnétiques.

2. Dispositif selon la revendication 1, caractérisé en ce que ledit élément mobile (6, 18, 24) est équipé d'un jeu d'éléments producteurs de champ magnétique (32, 16) créant en combinaison avec lesdits moyens magnétiques fixes (4, 12, 10, 14, 15, 27, 28, 29) lesdites forces magnétiques répulsives dont la résultante de direction parallèle à ladite direction normale (Z) tend à écarter lesdits éléments producteurs de champ magnétique desdits moyens magnétiques fixes.

3. Dispositif selon la revendication 1, caractérisé en ce que ladite liaison comporte en un lien mécanique flexible (19, 25, 26) souple dans ladite direction normale (Z) et raide dans ladite direction transversale (Y).

4. Dispositif selon la revendication 3, caractérisé en ce que ledit lien mécanique flexible (19, 25, 26) comporte au moins une lame élastique ayant une extrémité encastrée dans ledit élément mobile de guidage (6) et une autre extrémité fixée à ladite nacelle (2).

5. Dispositif selon la revendication 1, caractérisé en ce que ledit lien mécanique flexible solidarise ladite nacelle (2) avec deux bobines motrices (22, 23) disposée symétriquement par rapport à ladite nacelle (2) et solidaires de celle-ci.

6. Dispositif selon l'une quelconque des revendications 4 et 5, caractérisé en ce que ledit lien mécanique flexible (19, 25, 26) comporte des lames élastiques travaillant en flexion dans ladite direction normale et en compression-extension dans ladite direction transversale.

7. Dispositif selon l'une quelconque des revendications 4 à 6, caractérisé en ce que ledit lien mécanique flexible est pourvu de moyens d'amortissement.

8. Dispositif selon la revendication 2, caractérisé en ce que lesdits moyens magnétiques comportent une culasse (4, 12) ayant deux faces émettrices de flux dirigées vers ledit élément mobile (6, 18, 24) et agencées symétriquement par rapport à un plan parallèle auxdites directions normale (Z) et transversale (Y); chacune desdites faces émettrices étant vis à vis de deux desdits éléments producteurs de champ magnétique (32, 16) alignés selon ladite direction transversale (Y); deux autres faces émettrices de flux ayant respectivement des arêtes communes avec lesdites faces délimitant avec au moins un noyau magnétique intermédiaire (15, 27, 28) deux entrefers parallèles symétriques par rapport audit plan; lesdits second moyens électriquement conducteurs étant constitués par des portions d'au moins une bobine (6, 22, 23) entourant ledit noyau magnétique (15, 27, 28).

9. Dispositif selon la revendication 8, caractérisé en ce que lesdites autres faces encadrent deux noyaux magnétiques (27, 28) agencés symétriquement par rapport audit plan; lesdits second moyens électriquement conducteurs étant constitués par des portions des deux bobines (22, 23) entourant respectivement lesdits noyaux (27, 28).

10. Dispositif selon la revendication 8, caractérisé en ce que lesdites faces émettrices sont coplanaires.

11. Dispositif selon la revendication 8, caractérisé en ce que lesdites faces émettrices sont obliques par rapport audit plan.

12. Dispositif selon l'une quelconque des revendications 2 et 8 à 11, caractérisé en ce que lesdits moyens magnétiques comportent quatre faces émettrices de flux groupées par paires symétriques par rapport à un plan parallèle auxdites directions normale et transversale; les faces émettrices de chacune desdites paires définissant un passage pour lesdits éléments producteurs de champ magnétique (32, 16); d'autres faces émettrices ayant chacune une arête commune avec lesdites faces émettrices délimitant une première et une seconde paire d'entrefers parallèles symétriques par rapport audit plan; l'une desdites paires d'entrefers définissant des passages pour lesdits premiers moyens électriquement conducteurs (2) et l'autre desdites paires d'entrefers définissant également des passages pour lesdits seconds moyens électriquement conducteurs (6, 22, 23).

13. Dispositif selon la revendication 12, caractérisé en ce que lesdits entrefers contenant lesdits premiers moyens électriquement conducteurs (2) sont plus rapprochés que les autres entrefers.

14. Dispositif selon l'une quelconque des revendications 1 et 2, caractérisé en ce que lesdits premiers moyens électriquement conducteurs (2) sont situés dans des entrefers parallèles et symétriques par rapport à un plan parallèle auxdites directions normale (Z) et transversale (Y); ledit élément mobile (6) étant situé entre ledit objectif de projection (1) et lesdits entrefers.

15. Dispositif selon l'une quelconque des revendications 2 et 8 à 14, caractérisé en ce que lesdits premiers moyens électriquement conducteurs (2) sont constitués par des portions d'une bobine en forme de selle de cheval.

16. Dispositif selon l'une quelconque des revendications 2 et 8 à 15, caractérisé en ce que lesdits moyens magnétiques fixes sont munis d'aimants permanents.

17. Dispositif selon l'une quelconque des revendications 2 et 8 à 16, caractérisé en ce que lesdits éléments producteurs de champ magnétique (32) sont des aimants permanents.

18. Dispositif selon l'une quelconque des revendications 2 et 8 à 16, caractérisé en ce que lesdits éléments producteurs de champ magnétique (16) sont du type électroaimant.

19. Dispositif selon l'une quelconque des revendications 1 à 3, caractérisé en ce que pour que le tangage provoqué par lesdites secondes forces électodynamiques donne au niveau du support d'information un mouvement dans ladite direction transversale (Y) le plus possible en phase avec celle-ci, lesdites secondes forces électrodynamiques sont produites par une bobine (6) entourant un noyau central (15) desdits moyens magnétiques fixes; la masse (1, 2, 6, 18, 19, 20, 32, 34) desdits éléments déplacés étant répartie de chaque côté de ladite bobine (6).

20. Dispositif selon l'une quelconque des revendications 1 à 3, caractérisé en ce que pour que le tangage provoqué par lesdites secondes forces électrodynamiques donne au niveau du support d'information un mouvement dans ladite direction transversale (Y) le plus possible en phase avec celle-ci, lesdites secondes forces électrodynamiques sont produites par deux bobines (20, 23) entourant respectivement deux noyaux parallèles (27, 28) appartenant auxdits moyens magnétiques fixes, entre lesquels se situe le centre d'inertie desdits éléments déplacés (1, 2, 22, 23, 24, 25, 26).

21. Dispositif selon l'une quelconque des revendications 1 à 20, caractérisé en ce que les moyens d'émission du rayonnement de lecture et les moyens de détection du rayonnement qui a interagi avec ledit support d'information sont entraînés avec ledit élément mobile (6, 18).

22. Dispositif selon l'une quelconque des revendications 1 à 20, caractérisé en ce que ledit élément mobile (6, 18) comporte un miroir de renvoi (20) et en ce que les moyens d'émission (35) du rayonnement de lecture (9) et les moyens de détection du rayonnement qui a interagi avec ledit support d'information sont à poste fixe.

**Claims**

1. A device for accessing to a track carried by an information support, comprising a movable optical head which projects a light spot to a reference surface of said support, this spot being conceived to interact with adjacent track elements, said head including a lens for projecting said spot, which lens can move according to two directions, a normal direction, perpendicular to said surface, and a transverse direction with respect to said track elements, in order to realize the exact focalization and the pursuit of one of the track elements, said device including a movable nacelle which bears the lens (2) and which can be displaced according to said normal direction, a movable hold element (6, 18, 24) for said nacelle and a supporting member (15, 27, 28) for supporting said movable element and ensuring its guidance according to said transverse direction, said device further comprising, in association with said supporting member, stationary magnetic means (4, 12, 10, 14, 15, 27, 28, 29) inducing a magnetic field of a direction perpendicular to said directions, and first and second electrically conducting means dipped into the magnetic field in order to produce, in reply to electric control currents, first and second electrodynamic forces of directions which are respectively parallel to said normal and transverse directions, said first electrically conducting means being connected to said movable nacelle and said second electrically conducting means being connected to said movable guidance elements, characterized in that the connection between said nacelle and said movable element is rigid at least with respect to said transverse direction (Y), and that the movable element (6, 18, 24) is levitated by repulsive forces between two magnetic fields in order to suppress the solid friction between said supporting member (15, 27, 28) and said movable element (6, 18, 24).

2. A device according to claim 1, characterized in that said movable element (6, 18, 24) is supplied with a set of elements producing a magnetic field (32, 16) and creating said repulsive magnetic forces in combination with said stationary magnetic means (4, 12, 10, 14, 15, 27, 28, 29), the resultant of which in the direction parallel to the normal direction (Z) tending to spread said magnetic field producing elements from said stationary magnetic field.

3. A device according to claim 1, characterized in that said connection comprises a flexible mechanical link (19, 25, 26) which is resilient along said normal direction (Z) and rigid along said transverse direction (Y).

4. A device according to claim 3, characterized in that said flexible mechanical link (19, 25, 26) comprises at least one elastic blade, one end of which is emprisoned in said movable guidance element (6) and the other end of which is fixed to said nacelle (2).

5. A device according to claim 1, characterized in that said flexible mechanical link attaches said nacelle (2) to two drive coils (22, 23) disposed symmetrically with respect to said nacelle (2) and being attached thereto.

6. A device according to any one of the claims 4 and 5, characterized in that the flexible mechanical link (19, 25, 26) comprises elastic plates which are submitted to a flexion in said normal direction and to a compression-extension in said transverse direction.

7. A device according to any one of claims 4 to 6, characterized in that said flexible mechanical link is supplied with damping means.

8. A device according to claim 2, characterized in that said magnetic means comprise an armature (4, 12) having two flux emitting faces wich are directed towards said movable element (6, 18, 24) and symmetrically arranged with respect to a plane parallel to said normal (Z) and transverse directions (Y), each one of said flux transmitting faces being located opposite to two said magnetic field producing elements (32, 16), which are aligned according to said transversal direction (Y), two other flux transmitting faces having respectively common edges with said faces and delimiting with at least one intermediate magnetic core (15, 27, 28) two gaps which are parallel and symmetrical with respect to said plane, said second electrically conducting means being constituted by portions of at least one coil (6, 22, 23) surrounding said magnetic core (15, 27, 28).

9. A device according to claim 8, characterized in that said other faces frame two magnetic cores (27, 28) which are arranged symmetrically with respect to said plane, said second electrically conducting means being constituted by portions of the two coils (22, 23) surrounding said cores (27, 28) respectively.

10. A device according to claim 8, characterized in that the flux transmitting faces are co-planar.

11. A device according to claim 8, characterized in that said flux transmitting faces are inclined with respect to said plane.

12. A device according to any one of claims 2 and 8 to 11, characterized in that said magnetic means comprise four flux emitting faces arranged by symmetrical pairs with respect to a plane parallel to said normal and transverse directions, the flux emitting faces of each one of said pairs defining a passageway for said magnetic field producing elements (32, 16) other flux emitting faces each having a common edge with said flux emitting faces and delimiting a first and a second pair of parallel and symmetrical gaps with respect so said plane, one of said pairs of gaps defining passageways for said first electrically conducting means (2) and the other of said pairs of gaps defining also passageways for said second electrically conducting means (6, 22, 23).

13. A device according to claim 12, characterized in that said gaps containing said first electrically conducting means (2) are closer to each other than the other gaps.

14. A device according to any one of claims 1 and 2, characterized in that said first electrically conducting means (2) are located in parallel and symmetrical gaps with respect to a plane parallel to said normal (Z) and transverse directions (Y), said movable element (6) being located between said projection lens (1) and said gaps.

15. A device according to any one of claims 2 and 8 to 14, characterized in that said first electrically conducting means (2) are constituted by portions of a coil having the shape of a horse saddle.

16. A device according to any one of claims 2 and 8 to 15, characterized in that said stationary magnetic means are supplied with permanent magnets.

17. A device according to any one of claims 2 and 8 to 16, characterized in that said magnetic field producing elements (32) are permanent magnets.

18. A device according to any one of claims 2 and 8 to 16, characterized in that said magnetic field producing elements (16) are of the electromagnetic type.

19. A device according to any one of claims 1 to 3, characterized in that said second electrodynamic forces are produced by a coil (6) surrounding a central core (15) of said stationary magnetic means, the mass (1, 2, 6, 18, 19, 20, 32, 34) of said displaced elements being distributed on either side of said coil (6) such that the pitching caused by said second electrodynamic forces induces at the level of the information support a movement in said transverse direction (Y) as closely as possible in phase with the latter.

20. A device according to any one of claims 1 to 3, characterized in that said second electrodynamic forces are produced by two coils (20, 23) respectively surrounding two parallel cores (27, 28) belonging to said stationary magnetic means, between which the center of inertia of said displaced elements (1, 2, 22, 23, 24, 25, 26) is located, such that the pitching caused by said second electrodynamic forces induces at the level of the information support a movement in said transverse direction (Y) as closely as possible in phase with the latter.

21. A device according to any one of claims 1 to 20, characterized in that the means for emitting the reading radiation and the means for detecting the radiation after having interacted with said information support are driven together with said movable element (6, 18).

22. A device according to any one of claims 1 to 20, characterized in that said movable element (6, 18) comprises a deflection mirror (20) and that the means (35) for emitting the reading radiation (9) and the means for detecting the radiation after having interacted with the information support, are stationarily located.

## Patentansprüche

1. Vorrichtung zum Zugriff auf eine Spur eines Informationsträgers, mit einem beweglichen optischen Kopf, der auf eine Bezugsoberfläche des Trägers einen Lichtpunkt wirft, welcher mit benachbarten Elementen der Spur in Wirkverbindung treten soll, wobei der Kopf ein Objektiv zur Projektion des Punktes umschliesst, der gemäss zwei Richtungen beweglich ist, und zwar einer Normalrichtung bezüglich der Oberfläche und einer Transversalrichtung bezüglich der Spurelemente, um die genaue Brennpunkteinstellung bzw. die Verfolgung eines der Spurelemente zu bewirken, wobei die Vorrichtung einen beweglichen Objektivträger (2), der in der genannten Normalrichtung verschiebbar ist, ein bewegliches Unterstützungselement (6, 18, 24) für diesen Objektivträger und ein bewegliches Trageorgan (15, 27, 28) für das bewegliche Element aufweist, was dessen Führung in der genannten Transversalrichtung sicherstellt, wobei die Vorrichtung ausserdem in Zuordnung zum Trageorgan ortsfeste magnetische Mittel zur Induktion eines Magnetfelds (4, 12, 10, 14, 15, 27, 28, 29) einer Richtung senkrecht zu den genannten Richtungen sowie erste und zweite elektrisch leitende Mittel aufweist, die in das Magnetfeld eingetaucht sind, um in Abhängigkeit von elektrischen Steuerströmen erste und zweite elektrodynamische Kräfte zu erzeugen, die parallel zu den genannten normalen und transversalen Richtungen verlaufen, wobei das erste elektrisch leitende Mittel mit dem Objektivträger und das zweite elektrisch leitende Mittel mit dem beweglichen Führungselement fest verbunden ist, dadurch gekennzeichnet, dass die Verbindung zwischen dem Objektivträger und dem beweglichen Element zumindest in der transversalen Richtung (Y) starr ist und dass das bewegliche Element (6, 18, 24) durch Abstossungskräfte zwischen zwei magnetischen Feldern in der Schwebe gehalten wird, um die Festkörperreibung zwischen dem Trageorgan (15, 27, 28) und dem beweglichen Element (6, 18, 24) zu unterdrücken.

2. Vorrichtung nach Anspruch 1, dadurch gekennzeichnet, dass das bewegliche Element (6, 18, 24) mit einem Satz von ein Magnetfeld erzeugenden Elementen (32, 16) versehen ist, die in Kombination mit den ortsfesten magnetischen Mitteln (4, 12, 10, 14, 15, 27, 28, 29) die elektromagnetischen Abstossungskräfte erzeugen, deren Resultierende parallel zur Normalrichtung (Z) die ein Magnetfeld erzeugenden Elemente von den ortsfesten magnetischen Mitteln zu entfernen trachtet.

3. Vorrichtung nach Anspruch 1, dadurch gekennzeichnet, dass die Verbindung ein flexibles mechanisches Verbindungsglied (19, 25, 26) aufweist, das in Normalrichtung (Z) nachgiebig und in Transversalrichtung (Y) starr ist.

4. Vorrichtung nach Anspruch 3, dadurch gekennzeichnet, dass das flexible mechanische Verbindungsglied (19, 25, 26) mindestens eine elastische Lamelle enthält, deren eines Ende in dem beweglichen Führungselement (6) eingespannt ist und deren anderes Ende mit dem Objektivträger (2) verbunden ist.

5. Vorrichtung nach Anspruch 1, dadurch gekennzeichnet, dass das flexible mechanische Verbindungsglied den Objektivträger (2) mit zwei Antriebsspulen (22, 23) verbindet, die symmetrisch bezüglich des Objektivträgers an diesem befestigt sind.

6. Vorrichtung nach einem beliebigen der Ansprüche 4 und 5, dadurch gekennzeichnet, dass das flexible mechanische Verbindungsglied (19, 25, 26) elastische Lamellen besitzt, die auf Biegung in der Normalrichtung und auf Kompression-Dehnung in Transversalrichtung beansprucht sind.

7. Vorrichtung nach einem beliebigen der Ansprüche 4 bis 6, dadurch gekennzeichnet, dass das flexible mechanische Verbindungsglied mit Dämpfungsmitteln versehen ist.

8. Vorrichtung nach Anspruch 2, dadurch gekennzeichnet, dass die magnetischen Mittel einen Anker (4, 12) mit zwei einen Magnetfluss aussendenden und auf das bewegliche Element (6, 18, 24) gerichteten Seiten aufweist, die symmetrisch bezüglich einer zur Normalrichtung (Z) und zur Transversalrichtung (Y) parallelen Ebene angeordnet sind, wobei jeder dieser Magnetfluss aussendenden Seiten zwei ein Magnetfeld erzeugende und in Transversalrichtung (Y) fluchtend angeordneten Elementen (32, 16) gegenüberliegenden, während zwei andere einen Magnetfluss aussendende Seiten, die je gemeinsame Kanten mit diesen Seiten besitzen, mit mindestens einem Zwischenmagnetkern (15, 27, 28) zwei bezüglich der genannten Ebene symmetrische und parallele Magnetspalte begrenzen und wobei die zweiten elektrisch leitenden Mittel von Abschnitten mindestens einer Spule (6, 22, 23) gebildet werden, die den Magnetkern (15, 27, 28) umgibt.

9. Vorrichtung nach Anspruch 8, dadurch gekennzeichnet, dass die genannten anderen Seiten zwei Magnetkerne (27, 28) umrahmen, die symmetrisch bezüglich der genannten Ebene angeordnet sind, während die zweiten elektrisch leitenden Mittel von Abschnitten der beiden Spulen (22, 23) gebildet werden, die je einen der Kerne (27, 28) umgeben.

10. Vorrichtung nach Anspruch 8, dadurch gekennzeichnet, dass die einen Magnetfluss aussendenden Seiten in einer gemeinsamen Ebene liegen.

11. Vorrichtung nach Anspruch 8, dadurch gekennzeichnet, dass die einen Magnetfluss aussendenden Seiten bezüglich der genannten Ebene schräg verlaufen.

12. Vorrichtung nach einem beliebigen der Ansprüche 2 und 8 bis 11, dadurch gekennzeichnet, dass die magnetischen Mittel vier einen Magnetfluss aussendende Seiten enthalten, die paarweise symmetrisch bezüglich einer zur genannten Normalrichtung und zur genannten Transversalrichtung parallelen Ebene gruppiert sind, wobei die einen Magnetfluss aussendende Seiten jedes der Paare einen Durchlass für die ein Magnetfeld erzeugenden Elemente (32, 16) definieren, während andere einen Magnetfluss aussendende Seiten, die je eine gemeinsame Kante mit den erwähnten einen Magnetfluss aussendenden Seiten besitzen, ein erstes und ein zweites Paar paralleler und bezüglich der genannten Ebene symmetrischer Magnetspalte begrenzen, wobei eines der Magnetspaltpaare Durchlässe für die ersten elektrisch leitenden Mittel (2) und das andere Magnetspaltpaar ebenfalls Durchlässe für die zweiten elektrisch leitenden Mittel (6, 22, 23) definieren.

13. Vorrichtung nach Anspruch 12, dadurch gekennzeichnet, dass die Magnetspalte, die die ersten elektrisch leitenden Mittel (2) enthalten, einander näher sind als die anderen Magnetspalte.

14. Vorrichtung nach einem beliebigen der Ansprüche 1 und 2, dadurch gekennzeichnet, dass die ersten elektrisch leitenden Mittel (2) in parallelen und bezüglich einer Ebene parallel zu der Normalrichtung (Z) und der Transversalrichtung (Y) symmetrischen Magnetspalten angeordnet sind, wobei das bewegliche Element (6) zwischen dem Projektionsobjektiv (1) und den Magnetspalten liegt.

15. Vorrichtungen nach einem beliebigen der Ansprüche 2 und 8 bis 14, dadurch gekennzeichnet, dass die ersten elektrisch leitenden Mittel (2) aus Abschnitten einer sattelförmigen Spule bestehen.

16. Vorrichtung nach einem beliebigen der Ansprüche 2 und 8 bis 15, dadurch gekennzeichnet, dass die ortsfesten magnetischen Mittel mit Permanentmagneten versehen sind.

17. Vorrichtung nach einem beliebigen der Ansprüche 2 und 8 bis 16, dadurch gekennzeichnet, dass die ein magnetisches Feld erzeugenden Elemente (32) Dauermagnete sind.

18. Vorrichtung nach einem beliebigen der Ansprüche 2 und 8 bis 16, dadurch gekennzeichnet, dass die ein Magnetfeld erzeugenden Elemente (16) Elektromagnete sind.

19. Vorrichtung nach einem beliebigen der Ansprüche 1 bis 3, dadurch gekennzeichnet, dass die zweiten elektrodynamischen Kräfte von einer Spule (6) erzeugt werden, die einen zentralen Kern (15) der ortsfesten magnetischen Mittel umgibt, wobei die Masse (1, 2, 6, 18, 19, 20, 32, 34) der verschobenen Elemente zu beiden Seiten der Spule (6) verteilt ist, so dass das durch die zweiten elektrodynamischen Kräfte hervorgerufene Schlingern in Höhe des Informationsträgers eine Bewegung in Transversalrichtung (Y) ergibt, die möglichst gut in Phase mit dieser ist.

20. Vorrichtung nach einem beliebigen der Ansprüche 1 bis 3, dadurch gekennzeichnet, dass die zweiten elektrodynamischen Kräfte von zwei Spulen (20, 23) erzeugt werden, die je einen von zwei parallelen Kernen (27, 28) umgeben, welche zu den ortsfesten magnetischen Mitteln gehören und zwischen denen sich das Trägheitszentrum der verschobenen Elemente (1, 2, 22, 23, 24, 25, 26) befindet.

21. Vorrichtung nach einem beliebigen der Ansprüche 1 bis 20, dadurch gekennzeichnet, dass die Mittel, die den Lesestrahl aussenden, und die Mittel, die die Strahlung nach deren Interaktion mit dem Informationsträger empfangen, mit dem beweglichen Element (6, 18) in Bewegung versetzt werden.

22. Vorrichtung nach einem beliebigen der Ansprüche 1 bis 20, dadurch gekennzeichnet, dass das bewegliche Element (6, 18) einen Umlenkspiegel (20) aufweist und dass die Mittel (35) zur Aussendung des Lesestrahls (9) und die Mittel zum Empfang der Strahlung nach deren Interaktion mit dem Informationsträger ortsfest angeordnet sind.

# FIG.1

# FIG. 2

FIG.3

FIG.4

# FIG.5

0 088 010

# FIG.6

# FIG.7

# FIG. 8

# FIG. 9

# FIG. 10

## FIG.11

## FIG.12

## FIG.13

# FIG.14

# FIG.15

# FIG.16

# FIG.17

# FIG.18